# EUROPEAN PATENT APPLICATION

(11) **EP 4 283 519 A1**
(43) Date of publication of application: **29.11.2023**
(21) Application number: 22020242.8
(22) Date of filing: 28.05.2022
(51) Int. Cl.: G06N 3/00, G06N 5/04, G10L 15/00

(54) **FILTER FOR MULTIMODAL INFORMATION FUSION AND APPLICATION TO SOCIAL ROBOTS FOR AUTONOMOUS INTERACTION WITH HUMANS**

(71) Applicant: Aggelopoulos, Stamatios, 57001 Thermi (GR)
(72) Inventor: Kaburlasos, Vassilis, 5553 Pilea (GR); Pachidis, Theodoros, 65403 Kavala (GR); Lytridis, Christoroulos, 65404 Kavala (GR); Vrochidou, Eleni, 65403 Kavala (GR); Bazinas, Christos, 65404 Kavala (GR)

(57) **Abstract**

The invention regards the technical field of computer implemented methods. It concerns a filter called "INFOrmation Fusion Filter" (InfoFF), implemented in software, which receives as input semantically represented signals stemming from electronic sensors in the form of logical rules. The data input to InfoFF for machine learning are in the form of "If G₀ then c₀" rules, whereas the data input for decision making are in the form of "information granules" (i.e., intervals) G₀, of multimodal data. The operation of InfoFF is driven by a parametric "fuzzy order" function σ(G₀, Gᵢ) based on fuzzy logic principles, where "If Gᵢ then cᵢ", i∈{1,..., K} is the set of rules in an empirical knowledge base stored in InfoFF. Advantages of InfoFF include (i) it can explain its decisions by proposing the logically prevailing rule, (ii) the rules in the knowledge base of InfoFF are updated adaptively by the input-rules to InfoFF, (iii) formal fusion of multimodal information in the rules for optimal decision making. Filter InfoFF is meant to increase the degree of autonomy of social robots during their interaction with humans.

## Description

### Technical field of the invention

The invention regards the technical field of computer implemented methods. Specifically, it refers to the processing of multimodal information such as words, sounds, images, concepts, gestures and other or any combination thereof. An information modality stems from an electronic sensor mounted on a social robot in human-robot interaction applications. The invention regards a filter, namely "information fusion filter" (InfoFF), which implements in software various machine learning techniques. InfoFF receives inputs from the electronic sensors of a social robot and makes decisions regarding actions of the social robot. Decisions are made on the basis of fuzzy logic using a "fuzzy order" function σ(.,.). The main advantage of InfoFF is that it may retain semantics of the representation of its multimodal inputs during their processing and it can explain its decisions to humans by proposing logical (multimodal) rules, which it updates adaptively by its (also multimodal) inputs. An application of InfoFF is described toward increasing the degree of autonomy of social robots during their interaction with humans. Properly modified, the invention can be extended to alternative application domains, beyond social robots.

### Reference to the prior state-of-the-art indicating the disadvantages this invention is going to remedy.

Various social robots, e.g. NAO or Pepper and other, are used in ever more applications e.g. in education, in nursing support for selected categories of patients, entertainment, theater, delivery of services in hotels, and elsewhere. In the future, social robots are expected to coexist collaboratively with humans. However, a major disadvantage of social robots today is their limited autonomy, especially during their interaction with humans. In particular, a social robot typically operates in a *structured environment^{∗} without unexpected events. When an unexpected event happens, e.g. when an unexpected visitor appears or when an unexpected phrase is said, then a typical social robot ignores the unexpected event. Note that in some applications, e.g. in education, unexpected events as well as a number of technical limitations are addressed by a practice widely known as "Wizard of Oz" in which social robots are tele-operated by (hidden) human-observers so that the social robots respond appropriately to stimulae from their environment [1]. The following example illustrates the aforementioned limitations of a social robot.

Example: A social robot today can be trained to recognize specific expressions of a human face, e.g. joy, sadness, anger, etc., and, further, a recognized human expression triggers a specific action of the social robot. However, a new human face expression, which the social robot was not taught to recognize, does not trigger any action. It is desirable for the social robot to be able to generalize its previous experience so that a new human face expression can trigger an action sensibly. In addition, it is critical that the social robot can effectively accommodate multimodal information including words, sounds, images, concepts, gestures and other as well as any combination of those because that is how people communicate with one another. Finally, it is desirable for a social robot to be able to provide with common sense explanations regarding its actions. All of the above are, currently, shortcomings of social robots that the InfoFF invention is going to correct.

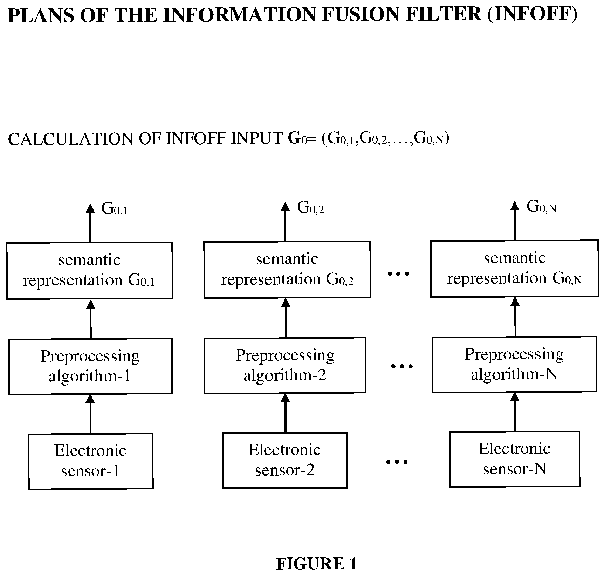

InfoFF is a parametric filter that implements in software machine learning techniques and makes decisions with an optimal fusion of multimodal information; the latter is represented by elements of a partially-ordered set. The comparative advantage of a partially-ordered set is that it retains inherent semantics of the data it processes as explained below. Specifically, InfoFF receives as input an N-tuple of multimodal information, as detailed below, and activates stored N-tuples of multimodal information (FIGURE 1) to a level (number) between 0 and 1, which indicates the degree the input N-tuple is associated to a stored N-tuple. The aforementioned degree of association is calculated by a "fuzzy order" function σ(.,.) according to fuzzy logic principles and it quantifies the degree to which an N-tuple is less than or equal to another N-tuple; hence, the InfoFF is able to generalize.

Note that alternative machine learning techniques typically transform multimodal information to numbers, thus loosing inherent semantics. For example, when non-numerical data such as words or symbols or graphs or distributions or tree data structures are transformed to N-tuples of numbers then the semantics of the non-numerical data is lost thus deteriorating the effectiveness of a social robot interaction with humans. In addition, previous machine learning techniques often make decisions using metric distances in the Euclidean space ignoring common sense with which a human could consent with. For example, let the rule R: "IF the set {a, b, c} of features is detected in a signal THEN activate a specific action D", where the sentence that follows IF is called ^{∗}antecedent^{∗} (of rule R), whereas the sentence that follows THEN is called ^{∗}consequent^{∗} (of rule R). In some applications it might be reasonable to trigger action D for any non-empty subset, say {b, c}, of the set {a, b, c}, whereas it might not be reasonable to trigger action D when none of the features of the set {a, b, c} is detected. Finally, in case a set of features is detected such as {b, c, d}, which partially overlaps with the set {a, b, c} in the antecedent of rule R, it might be reasonable to expect an activation of action D to a degree proportional to the degree of overlap of the sets {b, c, d} and {a, b, c}. The aforementioned expectations are satisfied by the "fuzzy order" function σ(G₀, Gᵢ), which quantifies the degree of truth of the proposition "antecedent G₀ is less-than or equal-to antecedent Gᵢ", symbolically "G₀⊆Gᵢ", where "If G₀ then c₀" is the input-rule and "If Gᵢ then cᵢ", i∈{1,..., K} is the set of rules in the **knowledge base** of InfoFF. In the previous example, G₀ and Gᵢ are subsets of features, e.g. G₀ = {b, c, d} and Gᵢ = {a, b, c}. Note that the set of subsets of a set is a popular example of a mathematical lattice, thus satisfies the requirement that an input to the InfoFF filter (FIGURE 1) belongs to a mathematical lattice. Other popular examples of mathematical lattices in applications include tree data structures [2], distributions of measurements each represented by an Intervals' Number [3], vector of numbers, and more. Finally, unlike other machine learning techniques, InfoFF explains its decisions by proposing logical rules.

### Short presentation of the invention as defined by the claims.

The features of the invention are defined in the claims.

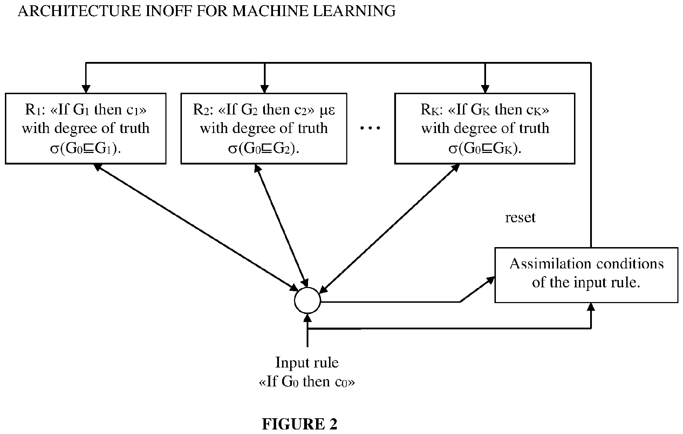

The InfoFF architecture for machine learning, as shown in FIGURE 2, consists of the following components: (1) A knowledge base that includes K rules R₁, ..., R_{K} of the form "If Gᵢ then cᵢ", where i∈{1, ..., K}, Gᵢ is the antecedent, whereas cᵢ is the consequent of the rule. Note that the antecedent Gᵢ of any rule is an "information granule", i.e. an interval [a, b] = Gᵢ defined on a partially ordered set, specifically on a mathematical lattice, which stems from electronic sensor measurements, whereas the consequent cᵢ of the rule is a software routine developed by a human, (2) an input, where an input-rule "If G₀ then c₀" is applied, 3) A fuzzy order function σ(G₀⊆Gᵢ), i∈{1,..., K}, which calculates the degree of truth of each rule by quantifying the degree of truth of the relation "consequent G₀ is less-than or equal-to the consequent Gᵢ" symbolically "G₀⊆Gᵢ", (4) A routine for selecting the prevailing rule "If Gⱼ then cⱼ", which corresponds to the maximum degree of truth σ(G₀⊆Gᵢ), i∈{1,..., K} among all the rules, (5) A comparator who compares (a) the (well-defined) size of consequent G₀∪G_{J} to a critical magnitude G^{∗}, where "u" denotes the lattice join operation between two mathematical lattice elements G₀ and G_{J}, and (b) the consequents c₀ and c_{J} of rules. The calculation of an individual element G_{0,1}, G_{0,2},..., G_{0, N} of the consequent G₀ (FIGURE 1) of an input-rule "If G₀ then c₀" is a result of preprocessing and is not part of this invention. Note that various ways of calculating G_{0.1}, G_{0.2}, ..., G_{0, N} have already been presented in the literature [2]. The InfoFF invention regards the description of both the learning and the decision-making mechanisms using logical rules. It is noteworthy that the InfoFF invention is based on published machine learning theories including the Adaptive Resonance Theory as well as Fuzzy Lattice Reasoning [4]. A unique feature of the InfoFF invention is the universal use of logical rules. Comparative advantages of InfoFF are (i) it can explain its decisions by proposing the logically prevailing rule; (ii) an adaptive update of the knowledge base (rules) of the InfoFF filter by rules-inputs to the InfoFF, (iii) the formal fusion of multimodal information in the rules toward optimal decision making as explained below with an example of fusing visual data, namely human face images, and audio data, namely speech. The InfoFF filter is meant to increase the degree of autonomy of social robots during their interaction with humans.

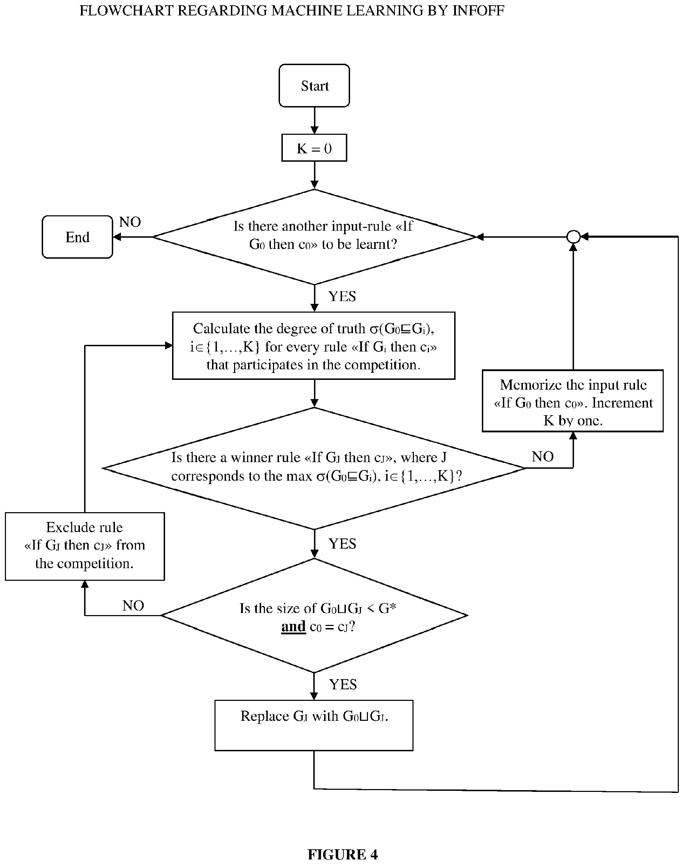

The logical rules "If Gᵢ then cᵢ", i∈{1,..., K}, form the basis of knowledge and are induced from InfoFF input data, which are also logical rules, as explained below with references, firstly, to the InfoFF architecture in FIGURE 2 and, secondly, to the flowchart in FIGURE 4: In particular, the first input-rule "If G₀ then c₀" presented to the InfoFF is memorized. Learning repeats each time a new input-rule "If G₀ then c₀" is presented to the InfoFF filter. More specifically, a competition takes place among the non-excluded rules in the knowledge base whereby the degree of truth of each rule "IF Gᵢ then cᵢ", i∈{1,..., K} is calculated as the value of the function σ(G₀⊆Gᵢ) , ie{1,..., K}. If all the rules in the knowledge base are excluded then there is no winner rule, hence the input rule "If G₀ then c₀" is memorized and, next, a new input-rule is fed in. Otherwise, i.e. if there is even one non-excluded rule in the knowledge base, a competition takes place among the non-excluded rules and winner is the rule "If G_{J} then c_{J}", which corresponds to the maximum σ(G₀⊆Gᵢ), ie{1,..., K}. Then, on the winner rule "If G_{J} then c_{J}" two tests are carried out: Firstly, it is tested whether the (well-defined) size of G₀∪G_{J} is less than a critical size G^{∗} and, secondly, it is tested whether consequent c₀ is identical to consequent c_{J}. If the answer to both the aforementioned tests is positive then and only then the G_{J} consequent of the winner rule is replaced by G₀∪G_{J}, thus assimilating the input rule "If G₀ then c₀", and learning goes on by feeding a new rule-input. Otherwise, i.e. if the answer to at least one of the two aforementioned tests is negative, the winner rule "If G_{J} then c_{J}" is excluded from further competition and the next winner is sought among the remaining non-excluded rules.

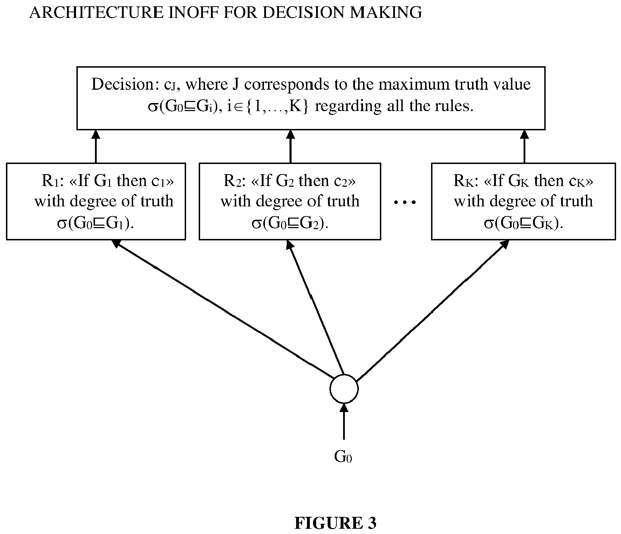

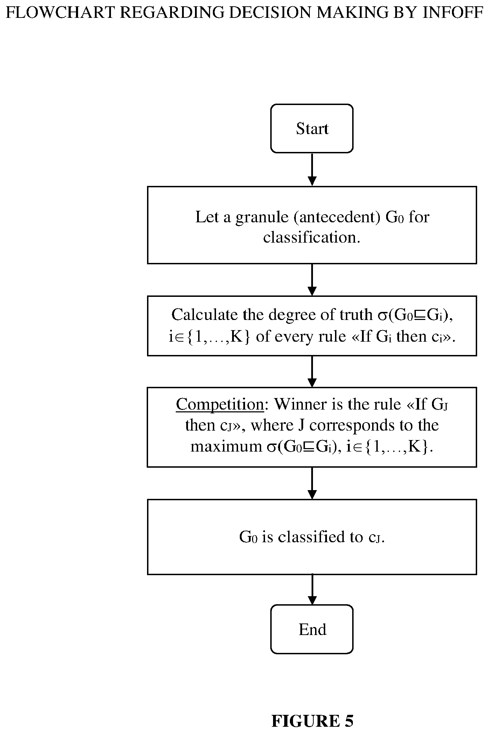

When the machine learning by InfoFF completes with the presentation of all the input-rules, then the calculated logical rules "If Gᵢ then cᵢ", i∈{1,..., K} are used for decision making as described in detail below with references, firstly, to the InfoFF architecture in FIGURE 3 and, secondly, to the flowchart in FIGURE 5. Specifically, let a consequent G₀ appear at the input of InfoFF for recognition / classification. Next, the degree of truth of each rule "If Gᵢ then cᵢ", i∈{1,..., K} of the knowledge base is calculated as the value of the function σ(G₀⊆Gₖ), i∈{1,..., K}. Then, a competition takes place among all the rules of the knowledge base in which as winner emerges the rule "If G_{J} then c_{J}" that corresponds to the maximum degree of truth σ(G₀⊆Gᵢ), i∈{1,..., K}. Finally, the input consequent G₀ triggers the consequent c_{J} according to the rule "If G₀ then c_{J}", hence InfoFF generalizes based on the set of rules "If G_{J} then cᵢ", i∈{1,..., K} of its knowledge base.

### Pointing out the advantages of the invention.

The present invention can be adapted to any social robot. It works on the basis of logical rules and can explain the answer (consequent) it proposes by pointing out the prevailing rule that results in from the competition among all the rules "If G_{J} then cᵢ", i∈{1, ..., K} of the knowledge base by comparing the degrees of truth σ(G₀⊆Gᵢ), i∈{1, ..., K}. All logical rules can involve multimodal information from the environment, e.g. words, sounds, images, concepts, structures such as gestures and other. In fact, a mathematically rigorous fusion of disparate types of data / information is feasible based on mathematical Order Theory or, equivalently, Lattice Theory as described in detail in [2]. A partial order data / information relation, that the InfoFF invention processes, defines semantics. In the latter sense, the InfoFF invention computes with semantics [2]. In every phase of machine learning as well as decision making, decisions are always made using a "fuzzy order" function σ based on logic. Thus, the operation of the InfoFF invention can be understood by a human based on logic, as described below with an example. The parametric functions (see below) involved in the calculation of the "fuzzy order" function σ enable optimization of the operation of the InfoFF filter by optimal parameter estimation techniques, e.g. by evolutionary optimization techniques, as described in detail elsewhere [2], in conjunction with an adaptive update of the rules in the knowledge base (FIGURE 4).

### Brief description of the numbered drawings.

**FIGURE 1****.** Representation of the mechanism that calculates the N-tuple G₀ = (G_{0.1}, G_{0.2}, ..., G_{0, N}) input to InfoFF. Each of the elements G_{0,1}, G_{0,2},..., G_{0, N} of the aforementioned N-tuple belongs to a mathematical lattice and is calculated separately and independently from any other using a suitable data preprocessing algorithm. Different preprocessing algorithms can process the signals of the same electronic sensor. Eventually, each element of the N-tuple G₀ = (G_{0,1}, G_{0,2}, D, G_{0, N}) emerges which is a semantic representation in the sense that it belongs to a set of partially ordered elements.
**FIGURE 2****.** Representation of the InfoFF architecture for machine learning with feedback. Shown are all the basic components (modules) involved in machine learning to process logical rules of the form "If G then c", where G is the antecedent stemming from electronic sensor signals and c is the human-defined consequent. Typical is the use of the "fuzzy order" function σ(G₀, Gᵢ), i∈{1,..., K} which compares two different antecedents G₀ and Gᵢ using logic principles in order to calculate the degree of truth of the rule "If Gᵢ then cᵢ».
**FIGURE 3****.** Representation of the InfoFF architecture for decision making. The decision is made by selecting the prevailing rule "If G_{J} then c_{J}" from the knowledge base of rules "If Gᵢ then cᵢ", i∈{1,..., K} using the "fuzzy order" function σ(G₀, Gᵢ), where the antecedent G₀ is input to the InfoFF architecture in order to calculate the degree of truth of each rule "If Gᵢ then cᵢ", i∈{1,..., K}. The, according to fuzzy logic, consequent for the input antecedent G₀ is c_{J}.
**FIGURE 4****.** Flowchart for machine learning by the InfoFF architecture. Specifically, the sequence of calculations and conditions is shown that explain the operation of the InfoFF architecture (FIGURE 2) for machine learning rules "If Gᵢ then cᵢ", ie{1,..., K} by iterative feeding and assimilation of input-rules "If G₀ then c₀".
**FIGURE 5****.** Flowchart for decision making by the InfoFF architecture. Specifically, the sequence of calculations of the InfoFF architecture is shown (FIGURE 3) according to which an input antecedent G₀ to the InfoFF architecture is assigned (by classification, making comparisons of the "fuzzy order" function σ(G₀, Gᵢ) values, i∈{1, ..., K}) the consequent c_{J} of the prevailing rule "If G_{J} then c_{J}" among all the rules in the knowledge base.

### The manner in which the invention can be industrially applied.

An invention is industrially applicable if it can be manufactured or used in any industry, including the industry of services by social robots e.g. in education including special education, as well as for assisting citizens e.g. in large public and other buildings such as ports, airports, railway stations, town halls, hotels, supermarkets, theaters and other.

The present invention (InfoFF) is a methodology for fusing multimodal data /information that can be implemented in computer software to guide a social robot toward an effective interaction with humans. The main advantage of InfoFF is that it retains the semantics of the representation of its input-rules during their learning in order to effectively enhance the interaction of social robots with humans. Specifically, a data preprocessing algorithm regarding a social robot electronic sensor signals calculates a partially ordered representation of the electronic sensor signals - Note that real numbers are a special case of partially ordered data, while other partially ordered data include: sets (of elements), graphs, histograms, distributions, symbols and other [2].

Social robots are an appropriate means of application of the InfoFF invention. However, the InfoFF invention can be applied wherever there are multimodal environmental stimulae, i.e. stimulae that involve disparate types of data /information e.g. words, sounds, images, concepts, structures such as gestures and other.

### Detailed development of at least one implementation of the invention using examples and references to figures.

This invention describes a filter for fusion of multimodal data, which may include a human face image, speech signals, and other for application to social robots with objective their autonomous interaction with humans. In order to reveal the operation of the InfoFF filter, there follows an example of its use on a social robot that interacts with a human.

Suppose a social robot with two sensors that receive information from the environment: a) a camera that receives images of a human face and b) a microphone that receives human speech signals. In each of the two input data streams stemming from each sensor, respectively, a preprocessing algorithm is applied in order to compute partially ordered representations of the corresponding data (FIGURE 1). Published work has already described specific data preprocessing algorithms that compute partially ordered representations from electronic sensor signals. Specifically, in [2] the image of a human face is represented by a partially ordered tree data structure, moreover in [3] human speech data are represented by partially ordered Intervals' Numbers. The result of preprocessing is a 2-tuple G₀ = (G_{0,IMAGE}, G_{0,SPEECH}), where each of the two elements G_{0,IMAGE} and G_{0,SPEECH} is calculated separately and independently of the other ones (FIGURE 1). The aforementioned calculations allow for parallel computations for each sensor, thus minimizing the time required to complete the preprocessing step. A 2-tuple G₀ is either the antecedent of a rule input to the InfoFF architecture for machine learning (FIGURE 2) or the entire input to the InfoFF architecture for decision making (FIGURE 3). Note that a complete input-rule, in addition to the antecedent G₀, calculated as explained above, also includes a consequent c₀ so that the rule has the form "If G₀ then c₀". Consequent c₀ defines a social robot action, which is predefined by the InfoFF filter designer, as a logical consequent of antecedent (input stimuli) G₀. For example, such an action could be a specific movement of the robot, a verbal response, or the activation of another type of robot interaction.

The operation of filter InfoFF for machine learning (FIGURE 2) is described in detail in the Flowchart of FIGURE 4. Specifically, before any learning, the knowledge base is empty, i.e. no rules are known. Therefore, the first input rule is automatically memorized in the knowledge base as shown in the Flowchart of FIGURE 4. Then, as long as an input-rule "If G₀ then c₀" appears at the input of filter InfoFF, then the following cycle of calculations is carried out, as detailed in FIGURE 4. Specifically, a competition takes place among the non-excluded from the competition rules "If Gᵢ then cᵢ", i∈{1,..., K} based on the degree of truth σ of each rule - Note that the competition starts with the participation of all the rules in the knowledge base. Winner of the competition is the rule "If G_{J} then c_{J}", i∈{1,..., K}, where J is the index of the rule with the maximum degree of truth σ. There is no winner rule only when all the rules have been excluded from the competition. In such a case, the input rule "If G₀ then c₀" is memorized. In a different case, i.e. when there is a winner rule, then the conditions for assimilating of the input-rule in the winner rule are examined. More specifically, the enhancement of antecedent G_{J} of the winner rule "If G_{J} then c_{J}" is calculated by its lattice join operation (u) with the antecedent G₀ of the input rule "If G₀ then c₀", i.e. the antecedent G₀∪G_{J} is calculated. If the (well defined) size of G₀∪G_{J} is less than a critical size G^{∗} and, at the same time, the consequent c_{J} of the winner rule "If G_{J} then c_{J}" is the same as the consequent c₀ of the input-rule "If G₀ then c₀", i.e. c₀ = c_{J}, then the antecedent G_{J} of the winner rule assimilates the antecedent G₀ of the input-rule by replacing G_{J} with G₀∪G_{J} and a new cycle of calculations starts considering a new input-rule "If G₀ then c₀". Otherwise, i.e. if either the (well-defined) size of the enhanced consequent G₀∪G_{J} is larger than the critical size G^{∗} or c₀ ≠ c_{J}, then the winner rule "If G_{J} then c_{J}" is excluded from further competition, which resumes toward calculating a new winner rule. In the aforementioned manner, the social robot can learn new rules from its ongoing interaction with humans and develop a knowledge base of rules that include multimodal information and trigger appropriate actions of the robot.

The operation of filter InfoFF for decision making (FIGURE 3) is detailed in the Flowchart of FIGURE 5. Specifically, given the logical rules "if Gᵢ then cᵢ", ie{1,..., K}, in the knowledge base of the InfoFF architecture (FIGURE 3) and have emerged from the learning, let an antecedent G₀, to be classified, appears at the input of InfoFF. Then, the rules "If Gᵢ then cᵢ", i∈{1,..., K} compete over G₀ using the degree of truth σ(G₀⊆Gᵢ) of each rule. Winner of the competition is the rule "If G_{J} then c_{J}", where J corresponds to the maximum σ(G₀⊆Gᵢ), i∈{1,..., K}. Therefore, the antecedent G₀ is classified to the consequent c_{J}. In practice, this means that the filter InfoFF, mounted on the social robot, based on the fusion of multimodal data /information received from heterogeneous sensors, reacts according to consequent cⱼ. Furthermore, the selection of the prevailing (winner) rule "If G_{J} then c_{J}" means that the social robot, with the help of the InfoFF filter, can make generalized decisions based on the logical rules of the InfoFF filter; in addition, the InfoFF filter proposes the winner rule to explain its answers. Note that the "fuzzy order" function σ, used to select the prevailing (winner) rule, is computed according to principles of logic; hence, the responses of filter InfoFF can be understood by humans toward improving their interaction with robots.

Critical to the operation of the InfoFF filter is the calculation of a "degree of truth" (or "fuzzy order") σ. From a technical point of view, the aforementioned calculation is feasible using two parametric functions. Technical details regarding the parametric functions used to calculate the degree of truth are given in a series of publications cited in [2].

Filter InfoFF can integrate a wide range of different electronic sensors as shown in FIGURE 1. The only requirement is the existence of at least one data preprocessing algorithm per electronic sensor which, from the electronic sensor signals, e.g. from the digital images recorded by a camera, to calculate a partially ordered representation e.g. sets (of objects), graphs, distributions, symbols, usual vectors of numbers and other as described above. Especially for social robot applications in special education, works have already been reported where such data preprocessing algorithms are used to calculate either only Intervals' Numbers (representing distributions of electronic sensor measurements e.g. from microphones) [3] or only tree data structures (representing the position of the human head and/or body) or only histograms (representing digital images) [2]. Additional types of partially ordered data can easily be included, according to the needs.

Any references to the degree of truth function σ relates to the original filter InfoFF, i.e. they are application features of the invention, are not restrictive and may change according to the type of G data used. The invention regards to a filter for fusing semantic representations of data / information and it is implemented in software as defined in the claims. The invention can be implemented with different types of data, stemming from different sensors, using different (parametric) functions to calculate the degree of truth of each rule. However, the description of the invention is carried out in terms of the features of filter InfoFF shown in FIGURES 1-5 and can be used as a prototype.

### Biblipgraphical references:

[1] C. Clabaugh, M. Matarić, "Escaping Oz: Autonomy in Socially Assistive Robotics," Annual Review of Control, Robotics, and Autonomous Systems, vol. 2, pp. 33-61, 2019.
[2] V. G. Kaburlasos, C. Lytridis, E. Vrochidou, C. Bazinas, G. A. Papakostas, A. Lekova, O. Bouattane, M. Youssfi, T. Hashimoto, "Granule-based-classifier (GbC): a lattice computing scheme applied on tree data structures," Mathematics, vol. 9, no. 22, 2889, 2021.
[3] C. Lytridis, E. Vrochidou, G. Sidiropoulos, G. A. Papakostas, V. G. Kaburlasos, E. Kourampa, E. Karageorgiou, "Audio signal recognition based on Intervals' Numbers (INs) classification techniques", Proceedings of the 10th International Conference on Information, Intelligence, Systems and Applications (IISA 2019), Patras, Greece, 15-17 July 2019.
[4] V.G. Kaburlasos, S.E. Papadakis, G.A. Papakostas, "Lattice computing extension of the FAM neural classifier for human facial expression recognition", IEEE Transactions on Neural Networks and Learning Systems, vol. 24, no. 10, pp. 1526-1538, 2013.

## Claims

1. The InfoFF (INFOrmation Fusion Filter) filter processes logical rules of the form "If G then c". Each rule "If G then c" is represented as a pair (G, c), where "G" is interpreted as an antecedent stemming from electronic sensor recordings, whereas "c" is interpreted as a consequent defined by a human. Specifically, the antecedent "G" of a rule "If G then c":
a) It is a multimodal information, which includes an N-tuple of elements that could be words, sounds, images, concepts, gestures and other or any combination of them, with partially ordered representations in a mathematical lattice, where the partial order relation defines some semantics.
b) It is an "information granule", i.e. an interval of values of partially ordered representations.
In addition,
c) There is a well-defined "fuzzy order" function σ(G₁, G₂) = σ(G₁⊆G₂), which quantifies the degree of truth of the proposition "the granule G₁ is less than or equal to the granule G₂".
d) The "fuzzy order" function σ(G₁, G₂) is defined based on a parametric "positive valuation" function.
e) There is a well-defined function for calculating the size of a granule "G".

2. The InfoFF filter, according to claim 1, processes multimodal information which may stem from the electronic sensors of a social robot, the data of which are preprocessed by appropriate algorithms toward computing partially ordered representations of multimodal information.

3. The InfoFF filter, according to claim 1, accepts as input data for learning logical rules of the form "If G₀ then c₀".

4. The InfoFF filter, according to claim 1, retains a knowledge base, which consists of a set of K rules of the form "if Gᵢ then cᵢ", ie{1,..., K}.

5. The InfoFF filter, according to claims 3 and 4, makes decisions following axioms of fuzzy logic using the "fuzzy order" function σ(G₀, Gᵢ) = σ(G₀⊆Gᵢ), i∈{1,..., K} and competition between the rules in the rule base where the winner is the rule "If G_{J} then cⱼ", which corresponds to the maximum σ(G₀⊆Gᵢ), i∈{1,..., K}.

6. The InfoFF filter, according to claims 1 and 5, can improve its decisions by optimizing the parameters of the "fuzzy order" function σ(G₀, Gᵢ), i∈{1,..., K}. The aforementioned optimization typically is pursued by evolutionary optimization techniques.

7. The InfoFF filter, according to claims 1 and 5, accepts as input data for decision making granules G₀ of multimodal information.

8. The InfoFF filter, according to claims 3 and 5, can learn by conditionally assimilating the experience of an input-rule "If G₀ then c₀" in the winner rule "If G_{J} then c_{J}" by applying the algebraic operation of lattice join (u). Specifically, the assimilation conditions include: (a) The (well-defined) granule G₀⊆G_{J} size is less than a critical size G^{∗} defined by a human, and (b) c₀ = c_{J}. The new rule that emerges is "If G₀⊆G_{J} then cⱼ".

9. The InfoFF filter, according to claims 1, 2, 3, 7 and 8, realizes computational learning of rules and can make decisions in real-time.

10. The InfoFF filter, according to claim 5, can explain its decisions by proposing the winner rule "If G_{J} then c_{J}".

11. The InfoFF filter, according to claim 5, can activate the c_{J} consequent of the winner rule "If G_{J} then c_{J}". The consequent cᵢ is a human-defined software routine that implements system actions in response to the input data.

12. The InfoFF filter, according to claims 1 to 11, can be used for sophisticated decision making based on multimodal information also in alternative applications beyond social robot applications.
